# EUROPÄISCHE PATENTSCHRIFT

(11) **EP 4 292 890 B1**
(45) Veröffentlichungstag und Bekanntmachung des Hinweises auf die Patenterteilung: **20.08.2025**
(21) Anmeldenummer: 22178638.7
(22) Anmeldetag: 13.06.2022
(51) Int. Cl.: B60T 8/32, B60T 8/172, B60T 13/10

(54) **ELEKTROHYDRAULISCHE BREMSE EINES FAHRZEUGS**
ELECTROHYDRAULIC BRAKE OF A VEHICLE
FREIN ÉLECTROHYDRAULIQUE D'UN VÉHICULE

(43) Veröffentlichungstag der Anmeldung: 20.12.2023
(73) Patentinhaber: KNORR-BREMSE Systeme für Nutzfahrzeuge GmbH, 80809 München (DE)
(72) Erfinder: HECKER, Falk, 71706 Markgröningen (DE); STEINBERGER, Jürgen, 82194 Gröbenzell (DE); SEIDENSCHWANG, Matthias, 81249 München (DE); SCHÖFBERGER, Tobias, 84048 Mainburg (DE)

(56) Entgegenhaltungen:
- EP-A2- 2 674 638
- WO-A1-2017/030476
- DE-A1- 4 340 467
- JP-A- 2014 079 789

## Beschreibung

Die Erfindung betrifft eine elektrohydraulische Bremse eines Fahrzeugs gemäß Anspruch 1.

Elektrohydraulische Bremsen sind Bremsen, bei denen an einem Pedal mittels eines Sensors in einem Bremswertgeber der Bremswunsch eines Fahrers detektiert wird, woraufhin eine mit dem Sensor angesteuerte Steuereinheit über einen Druckgeber in einem hydraulischen Bremssystem einen Druck erzeugt, aufgrund dessen die Bremsen einen dem Bremswunsch des Fahrers entsprechenden Bremseingriff durchführen.

JP 2014 079789 A offenbart eine hydraulische Bremse für eine Presse mit einer bidirektionalen Pumpe. WO 2017/030476 A1 beschreibt eine Bremsanlage für Fahrzeuge, mit einem Druckspeicher und einer bidirektionalen Pumpe und DE 43 40 467 A1 eine Bremsanlage für Fahrzeuge mit einem Druckspeicher. Eine gattungsgemäße hydraulische Bremse ist aus EP 2 674 638 A2 bekannt.

Aufgabe der Erfindung ist es, eine energiesparende elektrohydraulische Bremse eines Fahrzeugs mit erweitertem Funktionsumfang zur Verfügung zu stellen. Weiterhin soll auch ein Fahrzeug mit einer solchen elektrohydraulischen Bremse zur Verfügung gestellt werden.

Diese Aufgabe wird erfindungsgemäß durch die Merkmale der Ansprüche 1 und 17 gelöst.

### Offenbarung der Erfindung

Die Erfindung geht aus von einer elektrohydraulischen Bremse eines Fahrzeugs zur Verfügung, welche wenigstens Folgendes aufweist:
a) eine elektronische Steuerung mit einer implementierten Regelung, die während eines Bremsvorgangs bedarfsweise in wenigstens einem Regelzyklus durchgeführt wird, wobei während des Regelzyklus wenigstens ein Bremsdruckabbau und wenigstens ein Bremsdruckaufbau in wenigstens einem hydraulischen Bremsaktuator erfolgt,
b) den wenigstens einen hydraulischen Bremsaktuator, welcher abhängig von dem eingesteuerten Bremsdruck eine Bremskraft erzeugt,
c) einen Hydraulikflüssigkeitsvorrat zum Speichern von Hydraulikflüssigkeit,
d) eine Pumpe sowie eine Antriebsmaschine für die Pumpe,
e) wenigstens einen Druckspeicher zum Druckspeichern von Hydraulikflüssigkeit, welche aus dem Hydraulikflüssigkeitsvorrat stammt,
f) Strömungsverbindungen zwischen dem wenigstens einen Bremsaktuator, dem Hydraulikflüssigkeitsvorrat, der Pumpe und dem Druckspeicher, wobei
g) in wenigstens einer Strömungsverbindung eine wenigstens teilweise von der elektronischen Steuerung steuerbare Ventileinrichtung angeordnet ist, die eine Strömung von Hydraulikflüssigkeit in der wenigstens einen Strömungsverbindung steuert.
   Erfindungsgemäß ist vorgesehen, dass
h) die elektronische Steuerung wenigstens die Antriebsmaschine für die Pumpe und/oder die Ventileinrichtung derart steuert, dass während des wenigstens einen Regelzyklus Hydraulikflüssigkeit zwischen dem wenigstens einen Bremsaktuator und dem Druckspeicher hin- und herströmt oder hin- und her gefördert wird.

Die elektrohydraulische Bremse kann insbesondere eine Bremsanforderungseinrichtung umfassen, welche zum Steuern des Bremsvorgangs Signale für den Beginn und die Beendigung des Bremsvorgangs sowie für den Bremsbetätigungsgrad der Bremse in die elektronische Steuerung einsteuert. Abhängig von diesen Signalen steuert dann die elektronische Steuerung wenigstens die Antriebsmaschine für die Pumpe und/oder die Ventileinrichtung.

Durch die Erfindung wird eine Kraftübersetzung von der Antriebsmaschine zum hydraulischen Aktuator, beispielsweise einem hydraulischen Bremszylinder durch die Hydraulik bewerkstelligt. Dabei ist die hydraulische Kraftübersetzung einfach skalierbar, so dass Antriebsmaschinen verschiedener Leistung verwendet werden können. In der Art einer "Energieschaukel" strömt dann während des wenigstens einen Regelzyklus Hydraulikflüssigkeit zwischen dem wenigstens einen Bremsaktuator und dem Druckspeicher hin- und her bzw. wird insbesondere durch die Pumpe hin- und her gefördert. Folglich wird bei der Regelung hydraulische Energie in Form von unter Druck gesetzter Hydraulikflüssigkeit in dem Druckspeicher zwischengespeichert und während der Regelzyklen dem Druckspeicher entzogen und dann dem Druckspeicher wieder hinzugeführt. Regelvorgänge können dann mit einer hohen Dynamik ausgeführt werden.

Dabei ist der Druckspeicher bevorzugt ein Hochdruckspeicher, in welchem ein erster Druck herrscht, welcher insbesondere zumindest nach einem Bremsdruckabbau im Rahmen des wenigstens einen Regelzyklus größer ist als ein zweiter Druck, der im Hydraulikflüssigkeitsvorrat herrscht, weil beispielsweise der Druckspeicher während des Bremsdruckabbaus mit Druck aus dem wenigstens einen Bremsaktuator beaufschlagt wird. Der Druckspeicher stellt insofern bevorzugt einen Zwischenspeicher für die Hydraulikflüssigkeit dar, in welchem jene unter Druck zwischengespeichert wird.

Insbesondere ausschließlich oder auch während des wenigstens einen Regelzyklus strömt Hydraulikflüssigkeit zwischen dem wenigstens einen Bremsaktuator und dem Druckspeicher hin- und her oder wird hin- und her gefördert.

Wegen des höheren Druckniveaus im Druckspeicher ist eine Antriebsmaschine der Pumpe, beispielsweise ein Elektromotor mit relativ kleiner Leistung ausreichend. Weiterhin fällt dadurch auch bei der Regelung der Energieverbrauch vorteilhaft niedrig aus und die Regelung weist eine hohe Dynamik auf. Nicht zuletzt kann der Druck im Druckspeicher insbesondere bei längeren Bremsvorgängen, welche länger als eine Mindestdauer dauern, den Bremsdruckaufbau in dem wenigstens einen Bremsaktuator unterstützen.

In den Unteransprüchen sind vorteilhafte Weiterbildungen der Erfindung angegeben.

Bevorzugt ist die elektronische Steuerung ausgebildet, dass sie zumindest während des wenigstens einen Regelzyklus die Antriebsmaschine der Pumpe und/oder die Ventileinrichtung
a) zum Bremsdruckabbau derart steuert, dass Hydraulikflüssigkeit aus dem wenigstens einen Bremsaktuator in den Druckspeicher strömt oder gefördert wird, und
b) zum Bremsdruckaufbau derart steuert, dass Hydraulikflüssigkeit aus dem Druckspeicher in den wenigstens einen Bremsaktuator strömt oder gefördert wird.

Auch kann die Regelung ausgebildet sein, dass zumindest während des wenigstens einen Regelzyklus wenigstens ein einem Bremsdruckaufbau oder einem Bremsdruckabbau nachfolgendes Bremsdruckhalten durchgeführt wird, bei dem die elektronische Steuerung die Antriebsmaschine der Pumpe und/oder die Ventileinrichtung derart steuert, dass Hydraulikflüssigkeit in dem wenigstens einen Bremsaktuator gehalten wird.

Gemäß einer Weiterbildung kann die elektronische Steuerung wenigstens die Antriebsmaschine für die Pumpe und/oder die Ventileinrichtung derart steuern, dass insbesondere auch bei inaktiver Regelung, d.h., insbesondere wenn die Regelung nicht durchgeführt oder aktiviert wird,
a) für einen Bremsdruckaufbau, z.B. bei einem Beginn oder während eines oder des Bremsvorgangs in dem wenigstens einen Bremsaktuator Hydraulikflüssigkeit aus dem Hydraulikflüssigkeitsvorrat und/oder aus dem Druckspeicher in den wenigstens einen Bremsaktuator strömt oder gefördert wird, und/oder
b) für einen Bremsdruckabbau z.B. bei einer Beendigung eines oder des Bremsvorgangs Hydraulikflüssigkeit aus dem wenigstens einen Bremsaktuator in den Hydraulikflüssigkeitsvorrat und/oder in den Druckspeicher strömt oder gefördert wird.

Der Bremsdruckaufbau und/oder der Bremsdruckabbau erfolgt (erfolgen) dann in der beschriebenen Weise, ohne dass die Regelung aktiviert wird bzw. in Kraft tritt, weil ihre Ausführung beispielsweise nicht notwendig oder gewünscht ist. Mit anderen Worten kann der Druck im Druckspeicher zur Unterstützung eines Bremsdruckaufbaus oder als ausschließlicher Druck zum Bremsdruckaufbau in dem wenigstens einen Bremsaktuator herangezogen werden, auch wenn die Regelung nicht oder noch nicht aktiv ist. Ebenso kann der in dem wenigstens einen Bremsaktuator herrschende Druck bei einem Bremsdruckabbau in dem wenigstens einen Bremsaktuator herangezogen werden, um damit den Druckspeicher und/oder den Hydraulikflüssigkeitsvorrat zu beaufschlagen. Wenn der Druckspeicher mit dem Druck beaufschlagt wird, dann kann das dann höhere Druckniveau in dem Druckspeicher wiederum für einen Bremsdruckaufbau genutzt werden.

Die elektrohydraulische Bremse kann insbesondere eine Bremsanforderungseinrichtung umfassen, welche zum Steuern des Bremsvorgangs Signale für den Beginn und die Beendigung des Bremsvorgangs sowie für den Bremsbetätigungsgrad der Bremse in die elektronische Steuerung einsteuert, und welche
a) einen von einem Fahrer des Fahrzeugs betätigbaren Bremswertgeber, und/oder
b) ein Fahrerassistenzsystem und/oder einen Autopiloten umfasst.

Folglich können dann der Bremswertgeber, und/oder das Fahrerassistenzsystem und/oder der Autopilot ein Bremsanforderungssignal zur Anforderung des Bremsvorgangs erzeugen.

Bei der elektrohydraulischen Bremse kann die Pumpe eine unidirektional betreibbare Pumpe mit einer einzigen Förderrichtung sein, wobei dann die elektronische Steuerung die Antriebsmaschine der unidirektional betreibbaren Pumpe derart steuern kann, dass die unidirektional betreibbare Pumpe in der einzigen Förderrichtung Hydraulikflüssigkeit fördert. Bevorzugt kann der Betrieb der unidirektional betreibbaren Pumpe in der einzigen Förderrichtung zum Bremsdruckaufbau erfolgen, insbesondere während des wenigstens einen Regelzyklus. Alternativ kann der Betrieb der unidirektional betreibbaren Pumpe in der einzigen Förderrichtung auch zum Bremsdruckabbau, insbesondere während des wenigstens einen Regelzyklus erfolgen.

Gemäß einer alternativen Ausführungsform kann die Pumpe auch als bidirektional betreibbare Pumpe ausgebildet sein, wobei die elektronische Steuerung die Antriebsmaschine der Pumpe derart steuert, dass die bidirektional betreibbare Pumpe
a) in einer ersten Förderrichtung Hydraulikflüssigkeit aus dem Hydraulikflüssigkeitsvorrat und/oder aus dem Druckspeicher in den wenigstens einen Bremsaktuator fördert, und
b) in einer zweiten, zur ersten Förderrichtung entgegengesetzten Förderrichtung Hydraulikflüssigkeit aus dem wenigstens einen Bremsaktuator in den Druckspeicher und/oder in den Hydraulikflüssigkeitsvorrat fördert.

Dabei kann insbesondere der Betrieb der bidirektional betreibbaren Pumpe insbesondere während des wenigstens einen Regelzyklus
a) in der ersten Förderrichtung zum Bremsdruckaufbau erfolgen, und
b) in der zweiten Förderrichtung zum Bremsdruckabbau erfolgen.

Auch kann die elektronische Steuerung die Antriebsmaschine der Pumpe zumindest während des wenigstens einen Regelzyklus derart steuern, dass die Pumpe zum Bremsdruckabbau und zum Bremsdruckaufbau, insbesondere während des wenigstens einen Regelzyklus, abwechselnd zwischen der ersten Förderrichtung und der zweiten Förderrichtung betrieben wird.

Bei der elektrohydraulischen Bremse kann die Regelung eine radindividuelle (radselektive) oder achsindividuelle (achsselektive) Regelung umfassen, insbesondere eine Bremsschlupfregelung (ABS), eine Antriebsschlupfregelung (ASR) und/oder ein elektronisches Stabilitätsprogramm (ESP), welches je nach Fahrzeugsituation einen radselektiven Bremseingriff ausführt, wenn ein solcher zur Vermeidung eines Schleuderns des Fahrzeugs erforderlich ist.

Auch kann die elektronische Steuerung ausgebildet sein, dass sie während einer Füllphase die Antriebsmaschine der Pumpe und bedarfsweise die Ventileinrichtung steuert, um solange Hydraulikflüssigkeit in den Druckspeicher zu fördern, bis der im Druckspeicher herrschende Druck größer als ein Mindestdruck ist. Alternativ oder zusätzlich kann die elektronische Steuerung ausgebildet sein, dass sie während einer Füllphase die Antriebsmaschine der Pumpe und bedarfsweise die Ventileinrichtung steuert, um während wenigstens eines Bremsdruckabbaus, insbesondere während wenigstens eines Regelzyklus, solange Hydraulikflüssigkeit in den Druckspeicher zu fördern, bis der im Druckspeicher herrschende Druck größer als der Mindestdruck ist.

Bevorzugt kann der Mindestdruck in einem Bereich zwischen 50 und 100 Bar liegen. Der Druckspeicher ist daher bevorzugt ein Hochdruckspeicher. Demgegenüber ist der Hydraulikflüssigkeitsvorrat beispielsweise ein Niederdruckspeicher, mit einem in ihm herrschenden Druck von ungefähr Umgebungsdruck.

Auch kann die Ventileinrichtung wenigstens ein von der elektronischen Steuerung gesteuertes Magnetventil umfassen und eine Schaltstellung aufweisen, in welcher die Ventileinrichtung eine Strömungsverbindung zwischen dem wenigstens einen Bremsaktuator und dem Druckspeicher und/oder dem Hydraulikflüssigkeitsvorrat schafft. Dabei kann das wenigstens eine Magnetventil insbesondere in diese eine Schaltstellung federvorgespannt sein und diese eine Schaltstellung unbestromt einnehmen (Normally-Open). Dann kann das wenigstens eine Magnetventil bevorzugt zum schnellen Kraftabbau dienen und verbindet im Fehlerfall (z.B. Entstromung durch Ausfall der Stromversorgung oder einen Fehler in der Steuerung) den wenigstens einen hydraulischen Bremsaktuator mit dem Druckspeicher und/oder mit dem Hydraulikflüssigkeitsvorrat, wodurch eine Fail-Silent-Funktionalität zur Verfügung gestellt wird.

Bevorzugt kann die Ventileinrichtung wenigstens Folgendes umfassen:
a) ein Rückschlagventil,
b) ein 2/2-Wege-Magnetventil,
c) ein 3/2-Wege-Magnetventil,
d) ein 4/2-Wege-Magnetventil.

Die Erfindung betrifft auch ein Fahrzeug, mit wenigstens einer oben beschriebenen elektrohydraulischen Bremse.

### Zeichnung

Nachstehend sind Ausführungsbeispiele der Erfindung in der Zeichnung dargestellt und in der nachfolgenden Beschreibung näher erläutert. In der Zeichnung zeigt
- Fig.1: einen schematischen Schaltplan einer elektrohydraulischen Bremse gemäß einer bevorzugten Ausführungsform der Erfindung;
- Fig.2: die elektrohydraulische Bremse von Fig. 1 beim Bremskraftaufbau zu Beginn und während eines Bremsvorgangs ohne aktive Regelung;
- Fig. 3: die elektrohydraulische Bremse von Fig. 1 beim Bremskraftabbau zur Beendigung des Bremsvorgangs ohne aktive Regelung;
- Fig. 4: die elektrohydraulische Bremse von Fig. 1 beim Bremskraftabbau bei aktiver Regelung;
- Fig. 5: die elektrohydraulische Bremse von Fig. 1 beim Bremskraftaufbau bei aktiver Regelung;
- Fig. 6: die elektrohydraulische Bremse von Fig. 1 während einer Füllphase eines Druckspeichers;
- Fig. 7: einen schematischen Schaltplan einer elektrohydraulischen Bremse gemäß einer weiteren Ausführungsform der Erfindung;

### Beschreibung der Ausführungsbeispiele

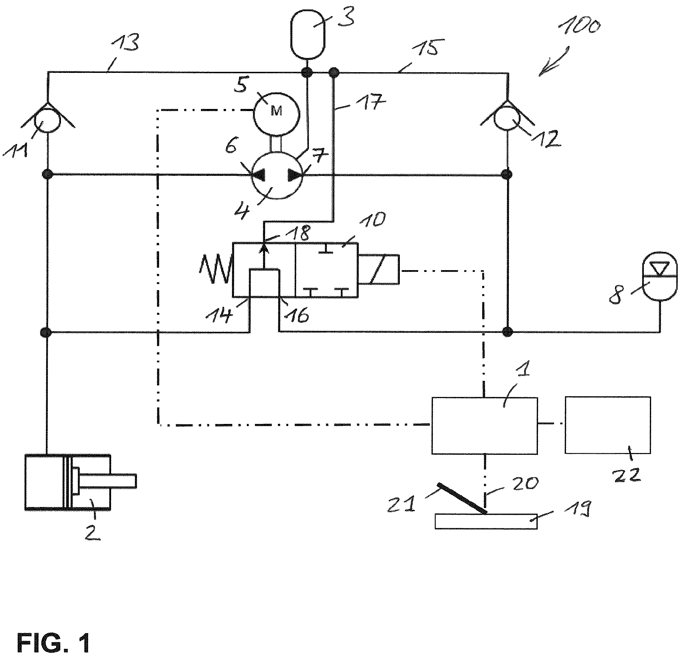

**Fig. 1** zeigt einen schematischen Schaltplan einer elektrohydraulischen Bremse 100 gemäß einer bevorzugten Ausführungsform der Erfindung.

Die elektrohydraulische Bremse 100 umfasst eine elektronische Steuerung 1 mit einer implementierten Regelung, die bedarfsweise während eines Bremsvorgangs in wenigstens einem Regelzyklus aktiviert und durchgeführt wird. Bei eines Regelzyklus erfolgt wenigstens ein Bremsdruckabbau und wenigstens ein Bremsdruckaufbau in wenigstens einem hydraulischen Bremsaktuator 2. Die Regelung umfasst hier beispielsweise eine Bremsschlupfregelung (ABS), bei welcher der Bremsschlupf insbesondere radindividuell geregelt wird. Die elektronische Steuerung 1 stellt insofern ein Bremssteuergerät der elektrohydraulischen Bremse 100 dar.

Weiterhin umfasst die elektrohydraulische Bremse 100 mehrere Bremsaktuatoren, von welchen hier stellvertretend für die weiteren Bremsaktuatoren lediglich ein Bremsaktuator 2 gezeigt ist. Der Bremsaktuator 2 wird hier beispielsweise durch eine hydraulische Scheibenbremse mit einem mit Hydraulikflüssigkeit belastbaren und von Hydraulikflüssigkeit entlastbaren hydraulischen Bremszylinder gebildet. Der hydraulische Bremsaktuator 2 erzeugt abhängig von einem in ihn eingesteuerten Bremsdruck eine Bremskraft an dem betreffenden Rad. Bevorzugt ist jedem Rad des Fahrzeugs ein solcher Bremsaktuator 2 zugeordnet, so dass die Räder individuell abgebremst werden können.

Darüber hinaus umfasst die elektrohydraulische Bremse 100 einen Hydraulikflüssigkeitsvorrat 3 zum bevorzugt drucklosen Speichern von Hydraulikflüssigkeit, beispielsweise unter Umgebungsdruck, sowie eine hier beispielsweise bidirektionale Pumpe 4, welche angetrieben von einer Antriebsmaschine 5, beispielsweise von einem Elektromotor, abhängig von der Drehrichtung der Antriebsmaschine in zwei entgegengesetzten Pumprichtungen betreibbar ist. Dies bedeutet, dass in einer ersten Pumprichtung die Saugseite der Pumpe der Druckseite der Pumpe entspricht, wenn diese in der entgegengesetzten zweiten Pumprichtung betrieben wird, und umgekehrt. Die Pumpe 4 weist daher einen ersten Anschluss 6 auf, der abhängig von der Pumprichtung dann zur Saugseite oder zur Druckseite der Pumpe 4 weist. Dasselbe gilt für einen zweiten Anschluss 7 der Pumpe 4.

Weiterhin umfasst die elektrohydraulische Bremse einen Druckspeicher 8 zum insbesondere Hochdruckspeichern von Hydraulikflüssigkeit sowie Strömungsverbindungen zwischen dem wenigstens einen Bremsaktuator 2, dem Hydraulikflüssigkeitsvorrat 3, der Pumpe 4 und dem Druckspeicher 8.

Nicht zuletzt umfasst die elektrohydraulische Bremse 100 eine Ventileinrichtung 9, die hier beispielsweise ein 3/2-Wege-Magnetventil 10 und ein erstes Rückschlagventil 11 sowie ein zweites Rückschlagventil 12 zur Verfügung stellt.

Die Strömungsverbindungen beinhalten eine erste Strömungsverbindung 13 zwischen dem Hydraulikflüssigkeitsvorrat 3, dem ersten Anschluss 6 der Pumpe 4, einem ersten Anschluss 14 des 3/2-Wege-Magnetventils 10 und dem wenigstens einen Bremsaktuator 2, eine zweite Strömungsverbindung 15 zwischen dem Hydraulikflüssigkeitsvorrat 3, dem zweiten Anschluss 7 der Pumpe 4, einem zweiten Anschluss 16 des 3/2-Wege-Magnetventils 10 und dem Druckspeicher 8 sowie eine dritte Strömungsverbindung 17 zwischen dem Hydraulikflüssigkeitsvorrat 3 und einem dritten Anschluss 18 des 3/2-Wege-Magnetventils 10.

In der ersten Strömungsverbindung 13 ist das erste Rückschlagventil 11 derart angeordnet, dass es eine Strömung von dem Hydraulikflüssigkeitsvorrat 3 zu dem wenigstens einen Bremsaktuator 2, zu dem ersten Anschluss 6 der Pumpe 4 und zu dem ersten Anschluss 14 des 3/2-Wege-Magnetventils 10 gestattet, aber eine Strömung in der Gegenrichtung nämlich von dem wenigstens einen Bremsaktuator 2 und/oder von dem ersten Anschluss 6 der Pumpe und/oder von dem ersten Anschluss 14 des 3/2-Wege-Magnetventils 10 in den Hydraulikflüssigkeitsvorrat 3 verhindert.

In analoger Weise ist in der zweiten Strömungsverbindung 15 das zweite Rückschlagventil 12 derart angeordnet, dass es eine Strömung von dem Hydraulikflüssigkeitsvorrat 3 zu dem zweiten Anschluss 7 der Pumpe 4, zu dem Druckspeicher 8 und zu dem zweiten Anschluss 16 des 3/2-Wege-Magnetventils 10 gestattet, aber eine Strömung in der Gegenrichtung nämlich von dem Druckspeicher 8 und/oder von dem zweiten Anschluss 7 der Pumpe 4 und/oder von dem zweiten Anschluss 16 des 3/2-Wege-Magnetventils 10 in den Hydraulikflüssigkeitsvorrat 3 verhindert.

Das 3/2-Wege-Magnerventil 10 besitzt eine in **Fig. 1** gezeigte Durchlassstellung, in welcher der erste Anschluss 14, der zweite Anschluss 16 und der dritte Anschluss 18 miteinander verbunden sind sowie eine Sperrstellung, in welcher zwischen keinem der ersten, zweite und dritten Anschlüsse 14, 16, 18 eine Strömungsverbindung besteht. In der in **Fig.1** gezeigten Durchlassstellung wird der wenigstens eine Bremsaktuator 2 direkt mit dem Hydraulikflüssigkeitsvorrat 3 und dem Druckspeicher 8 verbunden. In der Sperrstellung sind diese Verbindungen unterbrochen. Das 3/2-Wege-Magnerventil 10 ist bevorzugt ein "Normally Open"-Ventil, wobei es in die Durchlassstellung federvorgespannt ist und diese dann unbestromt einnimmt. Wird es hingegen von der elektronischen Steuerung 1 bestromt, so schaltet es in die Sperrstellung.

Das 3/2-Wege-Magnetventil 10 und die Antriebsmaschine 5 der Pumpe 4 werden von einer elektronischen Steuerung 1 koordiniert gesteuert, um Hydraulikflüssigkeit in den Strömungsverbindungen zu zirkulieren. Auch hierzu steht die elektronische Steuerung 1 mit einem elektrischen Bremswertgeber 19 der elektrohydraulischen Bremse 100 über eine Signalleitung 20 in Signalverbindung, der hier beispielsweise über ein Bremspedal 21 von einem Fahrer betätigt werden kann, um betätigungsabhängige Bremsanforderungssignale in die elektronische Steuerung 1 einzusteuern. Es ist hier vorgesehen, dass Bremsanforderungssignale nicht nur von dem fahrerbetätigten Bremswertgeber 19, sondern zusätzlich oder alternativ von einem Fahrerassistenzsystem wie beispielsweise einer adaptiven Geschwindigkeitsregelung (ACC) oder einem Notbremsassistenten und/oder von einem einen Autopiloten erzeugt und dann von einem entsprechenden Steuergerät 22 in die elektronische Steuerung 1 eingesteuert werden, um Bremsvorgänge auszulösen, zu steuern und zu beenden.

Im Folgenden werden verschiedene, in den Figuren illustrierte Situationen oder Stadien von Bremsvorgängen beschrieben. Strömungen unter einem relativ niedrigen Druck sind in den Figuren durch strickpunktierte Pfeile und Strömungen unter einem relativ hohen Druck durch gestrichelte Pfeile gekennzeichnet.

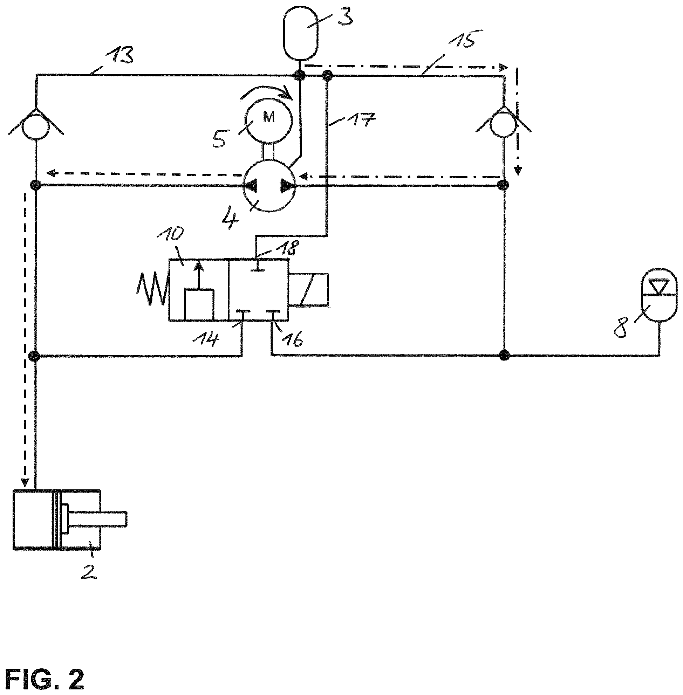

**Fig. 2** zeigt die elektrohydraulische Bremse 100 von **Fig. 1** beim Bremskraftaufbau zu Beginn und während eines Bremsvorgangs ohne aktive ABS-Regelung, d.h., dass die den Bremsaktuatoren 2 zugeordneten Räder zu Beginn und während des Bremsvorgangs nicht übermäßig schlupfen. Dabei steuert die elektronische Steuerung 1 die Antriebsmaschine 5 der Pumpe 4 an, um diese in einer hier durch den Pfeil symbolisierten ersten Pumprichtung anzutreiben, in welcher die Pumpe 4 über die zweite Strömungsverbindung 15 Hydraulikflüssigkeit aus dem Hydraulikflüssigkeitsvorrat 3 und dann über die erste Strömungsverbindung 13 in den wenigstens einen Bremsaktuator 2 fördert. Das erste Rückschlagventil 11 verhindert, dass Hydraulikflüssigkeit aus der ersten Strömungsverbindung 13 zurück in den Hydraulikflüssigkeitsvorrat 3 gefördert wird. Da das 3/2-Wege-Magnetventil 10 von der elektronischen Steuerung 1 dabei bestromt und dadurch in Sperrstellung geschaltet wird, wird die direkte Strömungsverbindung zwischen dem wenigstens einen Bremsaktuator 2 und dem Druckspeicher 8 sowie dem Hydraulikflüssigkeitsvorrat 3 gesperrt.

Die erste Strömungsverbindung 13 liegt dadurch auf der Druckseite der Pumpe 4, wodurch der Druck in der ersten Strömungsverbindung 13 höher ist als auf der saugseitigen zweiten Strömungsverbindung 15, wodurch ein Bremsdruck in dem wenigstens einen Bremsaktuator 2 und damit dort Bremskraft aufgebaut wird.

Falls die Bremskraft über einen gewissen Zeitraum beispielsweise konstant gehalten werden soll, was beispielsweise aus einer entsprechenden Betätigung des Bremspedals 21 und einem daraus hervorgehenden Bremsanforderungssignal hervorgeht, so bleibt das 3/2-Wege-Magnetventil 10 weiterhin in seiner Sperrstellung, aber die Antriebsmaschine 5 kann die Pumpe 4 weiterhin, aber mit reduzierter Leistung oder Drehzahl in der ersten Pumprichtung antreiben, um beispielsweise Leckverluste zu kompensieren.

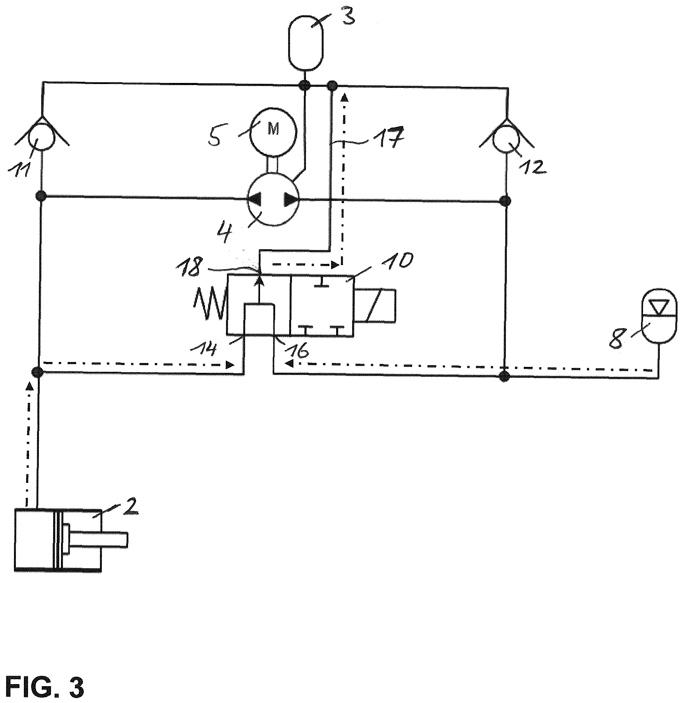

Wird nun die Bremse am Ende des Bremsvorgangs gelöst, so entsteht die **Fig. 3** gezeigte Situation, in welcher von der elektronischen Steuerung 1 das 3/2-Wege-Magnetventil 10 von der Sperrstellung in die Durchlassstellung geschaltet wird. Dann strömt Hydraulikflüssigkeit von dem wenigstens einen Bremsaktuator 2 durch das geöffnete 3/2-Wege-Magnetventil 10 über die dritte Strömungsverbindung 17 zurück in den Hydraulikflüssigkeitsvorrat 3. Die Antriebsmaschine 5 der Pumpe 4 ist dabei abgeschaltet.

Falls es während des beschriebenen Bremsvorgangs zu einem unzulässig hohen Bremsschlupf an wenigstens einem Rad des Fahrzeugs kommt, so wird die Bremskraft an dem betroffenen Rad durch die in der elektronischen Steuerung 1 implementierte ABS-Regelung in Regelzyklen abgebaut, gehalten und wieder aufgebaut. Ein Regelzyklus, hier beispielsweise ein ABS-Regelzyklus umfasst daher einen Bremsdruckabbau, ein Bremsdruckhalten und einen Bremsdruckaufbau an dem betreffenden Bremsaktuator 2.

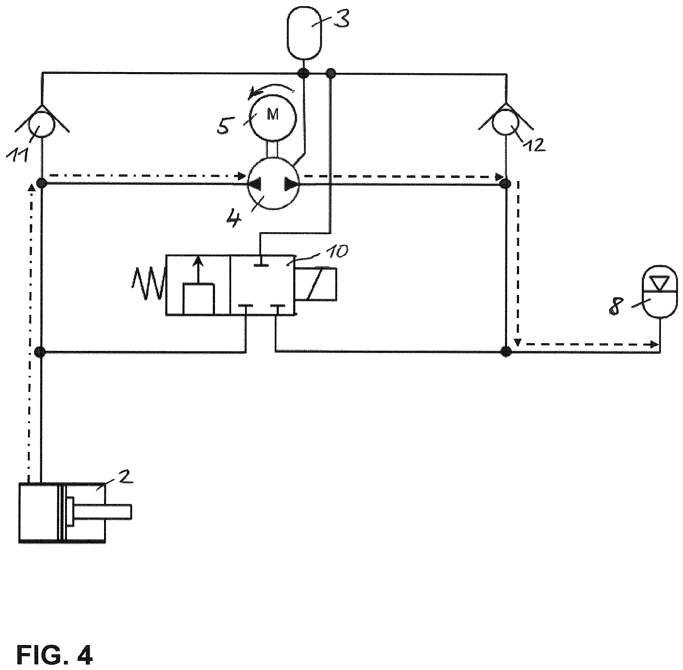

Der Bremsdruckabbau im Rahmen des ABS-Regelzyklus ist in **Fig. 4** gezeigt. Die elektronische Steuerung 1 steuert oder hält das 3/2-Wege-Magnetventil 10 in der Sperrstellung und treibt die Antriebsmaschine 5 derart an, dass die Pumpe 4 in der zweiten, durch den Pfeil symbolisierten Pumprichtung angetrieben wird. Dies sorgt dafür, dass Hydraulikflüssigkeit aus dem wenigstens einen Bremsaktuator 2 über die erste Strömungsverbindung 13 in den Druckspeicher 8 gepumpt wird, in welchem sich daraufhin der Druck erhöht.

Falls ein anschließendes Druckhalten Teil des ABS-Regelzyklus ist, so wird die Antriebsmaschine 5 beispielsweise von der elektronischen Steuerung 1 angehalten.

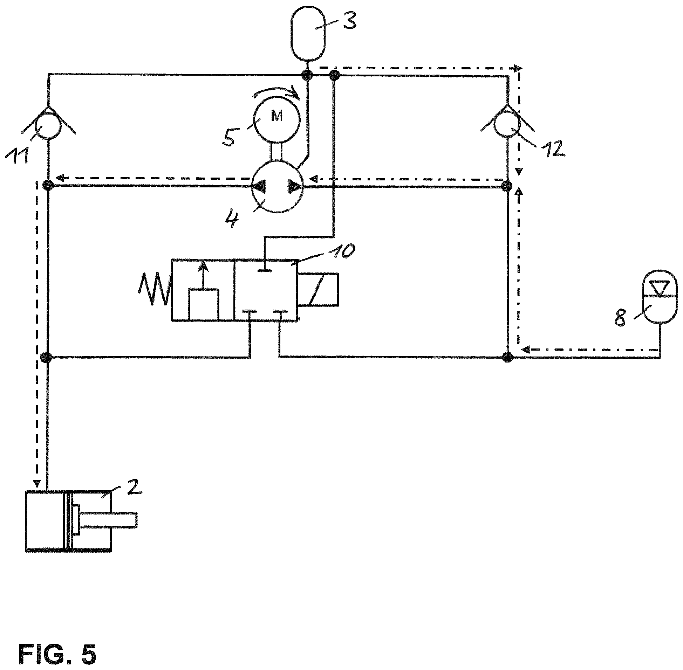

Für einen anschließenden Bremsdruckaufbau im Rahmen des ABS-Regelzyklus wird nun die Drehrichtung der Antriebsmaschine 5 der Pumpe 4 umgedreht, so dass die Pumpe 4 nun in der durch den Pfeil in **Fig. 5** symbolisierten Gegenrichtung drehenden Antriebsmaschine 5 angetrieben und die Pumpe 4 dann in der ersten Pumprichtung die Hydraulikflüssigkeit aus dem Druckspeicher 8 und dem Hydraulikflüssigkeitsvorrat 3 in den wenigstens einen Bremsaktuator 2 pumpt. Der zuvor im Laufe des Bremsdruckabbaus in dem Druckspeicher 8 erhöhte Druck wird dann bevorzugt für den folgenden Bremsdruckaufbau genutzt.

Folglich wird bei der Regelung bei jedem Wechsel von einem Bremsdruckabbau auf einen Bremsdruckaufbau und umgekehrt Hydraulikflüssigkeit in den Druckspeicher 8 unter dortiger Druckerhöhung und aus dem Druckspeicher 8 unter dortiger Drucksenkung durch einen Wechsel der Antriebsrichtung der bidirektional arbeitenden Pumpe 4 hin- und her gefördert. Dabei strömt folglich Hydraulikflüssigkeit nach Art einer Energieschaukel zwischen dem wenigstens einen Bremsaktuator 2 und dem Druckspeicher 8 hin- und her und wird insbesondere bei dem hier beschriebenen Ausführungsbeispiel durch die Pumpe 4 hin- und her gefördert.

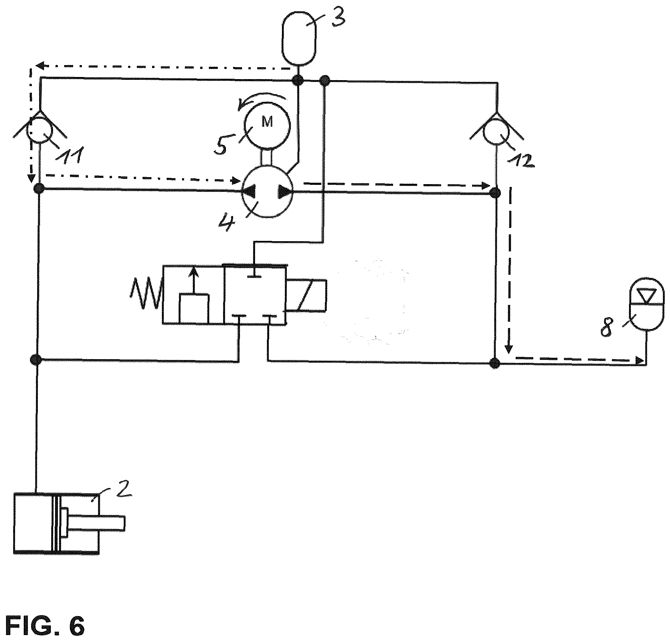

In **Fig. 6** ist eine Füllphase des Druckspeichers 8 gezeigt, wie sie beispielsweise zeitlich vor einem Regelzyklus von der elektronischen Steuerung 1 durchgeführt werden kann. Hierzu wir das 3/2-Wege-Magnetventil 10 wiederum in die Sperrstellung gesteuert und die Antriebsmaschine 5 derart angetrieben, dass die Pumpe 4 in der durch den Pfeil symbolisierten zweiten Pumprichtung angetrieben wird, so dass Hydraulikflüssigkeit aus dem Hydraulikflüssigkeitsvorrat 3 in den Druckspeicher 8 gepumpt wird, damit sich dort ein relativ hoher Druck von beispielsweise 50 bis 100 bar aufbauen kann, welcher dann beispielsweise zum Bremsdruckaufbau innerhalb eines (insbesondere kommenden oder späteren) Regelzyklus oder auch zur Unterstützung eines generellen Bremsdruckaufbaus ohne aktive Regelung wie zu **Fig. 2** beschrieben genutzt werden kann.

Kommt es nun zu einer Störung in der Elektrik, beispielsweise im Zuge eines Stromausfalls, so ist das 3/2-Wege-Magnetventile 10 unbestromt und schaltet dann federvorgespannt in seine Durchlassstellung. Demzufolge strömt dann Hydraulikflüssigkeit von dem wenigstens einen Bremsaktuator 2 durch das geöffnete 3/2-Wege-Magnetventil 10 über die dritte Strömungsverbindung 17 in den Hydraulikflüssigkeitsvorrat 3, wodurch der wenigstens eine Bremsaktuator 2 kraftfrei gestellt und damit eine Fail-Silent-Funktion zur Verfügung gestellt wird.

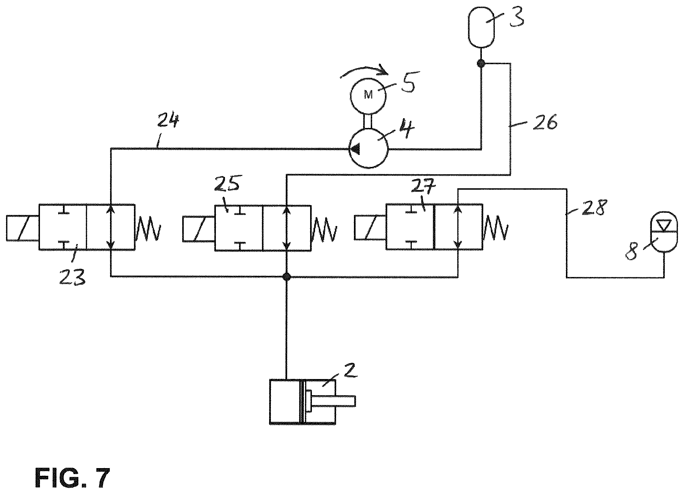

**Fig. 7** zeigt einen schematischen Schaltplan einer elektrohydraulischen Bremse 100 gemäß einer weiteren Ausführungsform der Erfindung. Im Unterschied zur Ausführungsform von **Fig. 1** ist dort eine lediglich unidirektional betreibbare Pumpe 4 vorhanden.

Weiterhin sind anstatt eines 3/2-Wege-Magnetventils drei 2/2-Wege-Magnetventile vorgesehen, nämlich ein erstes 2/2-Wege-Magnetventil 23 in einer ersten Strömungsverbindung 24, an welche der Hydraulikflüssigkeitsvorrat 3, die Pumpe 4, und der wenigstens eine Bremsaktuator 2 angeschlossen sind, ein zweites 2/2-Wege-Magnetventil 25 in einer zweiten Strömungsverbindung 26 zwischen dem Hydraulikflüssigkeitsvorrat 3 und dem wenigstens einen Bremsaktuator 2 und ein drittes 2/2-Wege-Magnetventil 27 in einer dritten Strömungsverbindung 28, an welche der Druckspeicher 8 und der wenigstens eine Bremsaktuator 2 angeschlossen sind. Die drei Strömungsverbindungen 24, 26 und 28 sind auf der Seite des Bremsaktuators 2 miteinander verbunden. Die drei 2/2-Wege-Magnetventile 23, 25 und 27 besitzen jeweils eine Sperrstellung und eine Durchlassstellung und sind beispielsweise als "Normally Open"-Ventile in die unbestromte Durchlassstellung federvorgespannt, während sie bei einer Bestromung ihre Sperrstellung einnehmen.

Die restlichen Elemente der elektrohydraulischen Bremse 100 wie die elektronische Steuerung 1, der Bremswertgeber 19 und das Steuergerät 22 des Fahrerassistenzsystems bzw. des Autopiloten sind in **Fig. 7** zwar nicht gezeigt, aber dennoch vorhanden und wirken wie oben beschrieben miteinander zusammen.

Zum Bremsdruckaufbau bzw. zum Bremszuspannen ohne ABS-Regelung wird die Antriebsmaschine 5 der Pumpe 4 von der elektronischen Steuerung 1 derart gesteuert, dass die Pumpe 4 in ihrer einzigen Pumprichtung Hydraulikflüssigkeit aus dem Hydraulikflüssigkeitsvorrat 3 über die erste Strömungsverbindung 24 in den Bremsaktuator 2 fördert. Das erste 2/2-Wege-Magnetventil 23 ist dabei durch die elektronische Steuerung 1 in die Durchlassstellung geschaltet, während das zweite 2/2-Wege-Magnetventil 25 und das dritte 2/2-Wege-Magnetventil 27 in ihre Sperrstellung geschaltet sind.

Für ein Bremslösen wird die Antriebsmaschine 5 der Pumpe 4 deaktiviert, d.h. sie dreht nicht, und das zweite 2/2-Wege-Magnetventil 25 in seine Durchlassstellung geschaltet, während das erste 2/2-Wege-Magnetventil 23 und das dritte 2/2-Wege-Magnetventil 27 jeweils in Sperrstellung geschaltet werden. Dadurch strömt Hydraulikflüssigkeit durch das geöffnete zweite 2/2-Wege-Magnetventil 25 und die zweite Strömungsverbindung 26 zurück in den Hydraulikflüssigkeitsvorrat 3.

Für einen Bremsdruckabbau im Rahmen eines ABS-Regelzyklus steuert die elektronische Steuerung 1 das erste und zweite 2/2-Wege-Magnetventil 23, 25 jeweils in die Sperrstellung, das dritte 2/2-Wege-Magnetventil 27 jedoch in die Durchlassstellung, so dass über das geöffnete dritte 2/2-Wege-Magnetventil 27 und die dritte Strömungsverbindung 28 Hydraulikflüssigkeit von dem wenigstens einen Bremsaktuator 2 in den Druckspeicher 8 strömt, um dort den Druck zu erhöhen.

Falls ein anschließendes Druckhalten Teil des ABS-Regelzyklus ist, so wird das dritte 2/2-Wege-Magnetventil 27 beispielsweise von der Durchlassstellung in die Sperrstellung geschaltet, in welcher sich dann auch weiterhin das erste und zweite 2/2-Wege-Magnetventil 23, 25 befinden.

Für einen anschließenden Bremsdruckaufbau im Rahmen des ABS-Regelzyklus wird nun die Antriebsmaschine 5 der Pumpe 4 wiederum so gesteuert, dass die Pumpe 4 in ihrer einzigen Pumprichtung Hydraulikflüssigkeit aus dem Hydraulikflüssigkeitsvorrat 3 über die erste Strömungsverbindung 24 in den wenigstens einen Bremsaktuator 2 pumpt. Hierzu wird auch das erste 2/2-Wege-Magnetventil 23 von der Sperrstellung in die Durchlassstellung geschaltet. Weiterhin wird das dritte 2/2-Wege-Magnetventil 27 in die Durchlassstellung geschaltet, damit zuvor beim Bremsdruckabbau in den Druckspeicher 8 gefördertes und dort den Druck erhöhende Hydraulikflüssigkeit wieder zurück in den wenigstens einen Bremsaktuator 2 strömen kann. Der Druck im Druckspeicher 8 wirkt dann zusätzlich zu dem Druck in dem wenigstens einen Bremsaktuator 2, der durch die Pumpe 4 aufgebaut wird.

Folglich strömt auch bei dem Ausführungsbeispiel von **Fig. 7** bei jedem Wechsel von einem Bremsdruckabbau auf einen Bremsdruckaufbau und umgekehrt Hydraulikflüssigkeit in den Druckspeicher 8 unter dortiger Druckerhöhung und aus dem Druckspeicher 8 unter dortiger Drucksenkung hin- und her.

Kommt es nun zu einer Störung in der Elektrik, beispielsweise im Zuge eines Stromausfalls, so sind die drei 2/2-Wege-Magnetventile 23, 25 und 27 unbestromt und schalten dann federvorgespannt in ihre Durchlassstellung. Demzufolge strömt dann Hydraulikflüssigkeit von dem wenigstens einen Bremsaktuator 2 durch das geöffnete zweite 2/2-Wege-Magnetventil 25 über die zweite Strömungsverbindung 26 in den Hydraulikflüssigkeitsvorrat 3, wodurch der wenigstens eine Bremsaktuator 2 kraftfrei gestellt und damit eine Fail-Silent-Funktion zur Verfügung gestellt wird.

Bei den oben beschriebenen Ausführungsbeispielen wurde jeweils ein radindividueller Bremsdruckaufbau bzw. Bremsdruckabbau beschrieben. Es ist jedoch klar, dass der Bremsdruckaufbau und der Bremsdruckabbau auch achsweise durchgeführt werden kann, d.h. für alle Bremsaktuatoren 2 an einer Achse.

### Bezugszeichenliste

- 1: Steuerung
- 2: Bremsaktuator
- 3: Hydraulikflüssigkeitsvorrat
- 4: Pumpe
- 5: Antriebsmaschine
- 6: erster Anschluss
- 7: zweiter Anschluss
- 8: Druckspeicher
- 9: Ventileinrichtung
- 10: 3/2-Wege-Magnetventil
- 11: erstes Rückschlagventil
- 12: zweites Rückschlagventil
- 13: erste Strömungsverbindung
- 14: erster Anschluss
- 15: zweite Strömungsverbindung
- 16: zweiter Anschluss
- 17: dritte Strömungsverbindung
- 18: dritter Anschluss
- 19: Bremswertgeber
- 20: Signalleitung
- 21: Bremspedal
- 22: Steuergerät
- 23: erstes 2/2-Wege-Magnetventil
- 24: erste Strömungsverbindung
- 25: zweites 2/2-Wege-Magnetventil
- 26: zweite Strömungsverbindung
- 27: drittes 2/2-Wege-Magnetventil
- 28: dritte Strömungsverbindung
- 100: elektrohydraulische Bremse

## Patentansprüche

1. Elektrohydraulische Bremse (100) eines Fahrzeugs, welche wenigstens Folgendes aufweist:
a) eine elektronische Steuerung (1) mit einer implementierten Regelung, die während eines Bremsvorgangs bedarfsweise in wenigstens einem Regelzyklus durchgeführt wird, wobei während des Regelzyklus wenigstens ein Bremsdruckabbau und wenigstens ein Bremsdruckaufbau in wenigstens einem hydraulischen Bremsaktuator (2) erfolgt,
b) den wenigstens einen hydraulischen Bremsaktuator (2), welcher abhängig von dem eingesteuerten Bremsdruck eine Bremskraft erzeugt,
c) einen Hydraulikflüssigkeitsvorrat (3) zum drucklosen Speichern von Hydraulikflüssigkeit,
d) eine Pumpe (4) sowie eine Antriebsmaschine (5) für die Pumpe (4),
e) wenigstens einen Druckspeicher (8) zum Druckspeichern von Hydraulikflüssigkeit, welche aus dem Hydraulikflüssigkeitsvorrat (3) stammt,
f) Strömungsverbindungen (13, 15, 17; 24, 26, 28) zwischen dem wenigstens einen Bremsaktuator (2), dem Hydraulikflüssigkeitsvorrat (3), der Pumpe (4) und dem Druckspeicher (8), wobei
g) in wenigstens einer Strömungsverbindung (13, 15, 17; 24, 26, 28) eine wenigstens teilweise von der elektronischen Steuerung (1) steuerbare Ventileinrichtung (10; 23, 25, 27) angeordnet ist, die eine Strömung von Hydraulikflüssigkeit in der wenigstens einen Strömungsverbindung (13, 15, 17; 24, 26, 28) steuert, **dadurch gekennzeichnet, dass**
h) die elektronische Steuerung (1) wenigstens die Antriebsmaschine (5) für die Pumpe (4) und/oder die Ventileinrichtung (10; 23, 25, 27) derart steuert, dass während des wenigstens einen Regelzyklus Hydraulikflüssigkeit zwischen dem wenigstens einen Bremsaktuator (2) und dem Druckspeicher (8) hin- und herströmt oder hin- und her gefördert wird.

2. Elektrohydraulische Bremse nach Anspruch 1, **dadurch gekennzeichnet, dass** die elektronische Steuerung (1) ausgebildet ist, dass sie zumindest während des wenigstens einen Regelzyklus die Antriebsmaschine (5) der Pumpe (4) und/oder die Ventileinrichtung (10; 23, 25, 27)
a) zum Bremsdruckabbau derart steuert, dass Hydraulikflüssigkeit aus dem wenigstens einen Bremsaktuator (2) in den Druckspeicher (8) strömt oder gefördert wird, und
b) zum Bremsdruckaufbau derart steuert, dass Hydraulikflüssigkeit aus dem Druckspeicher (8) in den wenigstens einen Bremsaktuator (2) strömt oder gefördert wird.

3. Elektrohydraulische Bremse nach Anspruch 1 oder 2, **dadurch gekennzeichnet, dass** die Regelung ausgebildet ist, dass zumindest während des wenigstens einen Regelzyklus wenigstens ein einem Bremsdruckaufbau oder einem Bremsdruckabbau nachfolgendes Bremsdruckhalten durchgeführt wird, bei dem die elektronische Steuerung (1) die Antriebsmaschine (5) der Pumpe (4) und/oder die Ventileinrichtung (10; 23, 25, 27) derart steuert, dass Hydraulikflüssigkeit in dem wenigstens einen Bremsaktuator (2) gehalten wird.

4. Elektrohydraulische Bremse nach einem der vorhergehenden Ansprüche, **dadurch gekennzeichnet, dass** die elektronische Steuerung (1) wenigstens die Antriebsmaschine (5) der Pumpe (4) und/oder die Ventileinrichtung (10; 23, 25, 27) derart steuert, dass bei inaktiver Regelung
a) für einen Bremsdruckaufbau in dem wenigstens einen Bremsaktuator (2) Hydraulikflüssigkeit aus dem Hydraulikflüssigkeitsvorrat (3) und/oder aus dem Druckspeicher (8) in den wenigstens einen Bremsaktuator (2) strömt oder gefördert wird, und
b) für einen Bremsdruckabbau Hydraulikflüssigkeit aus dem wenigstens einen Bremsaktuator (2) in den Hydraulikflüssigkeitsvorrat (3) strömt oder gefördert wird.

5. Elektrohydraulische Bremse nach einem der vorhergehenden Ansprüche, **dadurch gekennzeichnet, dass** sie eine Bremsanforderungseinrichtung umfasst, welche zum Steuern des Bremsvorgangs Signale für den Beginn und die Beendigung des Bremsvorgangs sowie für den Bremsbetätigungsgrad der Bremse in die elektronische Steuerung (1) einsteuert, und welche
a) einen von einem Fahrer des Fahrzeugs betätigbaren Bremswertgeber (19), und/oder
b) ein Fahrerassistenzsystem (22) und/oder einen Autopiloten umfasst.

6. Elektrohydraulische Bremse nach einem der vorhergehenden Ansprüche, **dadurch gekennzeichnet, dass** die Pumpe (4) eine unidirektional betreibbare Pumpe mit einer einzigen Förderrichtung ist, wobei die elektronische Steuerung (1) die Antriebsmaschine (5) der unidirektional betreibbaren Pumpe (4) derart steuert, dass die unidirektional betreibbare Pumpe (4) in der einzigen Förderrichtung Hydraulikflüssigkeit fördert.

7. Elektrohydraulische Bremse nach Anspruch 6, **dadurch gekennzeichnet, dass** der Betrieb der unidirektional betreibbaren Pumpe (4) in der einzigen Förderrichtung zum Bremsdruckaufbau erfolgt.

8. Elektrohydraulische Bremse nach einem der Ansprüche 1 bis 5, **dadurch gekennzeichnet, dass** die Pumpe (4) eine bidirektional betreibbare Pumpe ist, wobei die elektronische Steuerung (1) die Antriebsmaschine (5) der Pumpe (4) derart steuert, dass die bidirektional betreibbare Pumpe
a) in einer ersten Förderrichtung Hydraulikflüssigkeit aus dem Hydraulikflüssigkeitsvorrat (3) und/oder aus dem Druckspeicher (8) in den wenigstens einen Bremsaktuator (2) fördert, und
b) in einer zweiten, zur ersten Förderrichtung entgegengesetzten Förderrichtung Hydraulikflüssigkeit aus dem wenigstens einen Bremsaktuator (2) in den Druckspeicher (8) und/oder in den Hydraulikflüssigkeitsvorrat (3) fördert.

9. Elektrohydraulische Bremse nach Anspruch 8, **dadurch gekennzeichnet, dass** der Betrieb der bidirektional betreibbaren Pumpe (4)
a) in der ersten Förderrichtung zum Bremsdruckaufbau erfolgt, und
b) in der zweiten Förderrichtung zum Bremsdruckabbau erfolgt.

10. Elektrohydraulische Bremse nach Anspruch 9, **dadurch gekennzeichnet, dass** die elektronische Steuerung (1) die Antriebsmaschine (5) der Pumpe (4) zumindest während des wenigstens einen Regelzyklus derart steuert, dass die Pumpe (4) zum Bremsdruckabbau und zum Bremsdruckaufbau abwechselnd zwischen der ersten Förderrichtung und der zweiten Förderrichtung betrieben wird.

11. Elektrohydraulische Bremse nach einem der vorhergehenden Ansprüche, **dadurch gekennzeichnet, dass** die Regelung eine radindividuelle oder achsindividuelle Bremsschlupf- oder Antriebsschlupfregelung und/oder eine Fahrdynamikregelung umfasst.

12. Elektrohydraulische Bremse nach einem der vorhergehenden Ansprüche, **dadurch gekennzeichnet, dass** die elektronische Steuerung (1) ausgebildet ist, dass sie während einer Füllphase die Antriebsmaschine (5) der Pumpe (4) und die Ventileinrichtung (10; 23, 25, 27) steuert, um solange Hydraulikflüssigkeit in den Druckspeicher (8) zu fördern, bis der im Druckspeicher (8) herrschende Druck größer als ein Mindestdruck ist.

13. Elektrohydraulische Bremse nach Anspruch 12, **dadurch gekennzeichnet, dass** der Mindestdruck in einem Bereich zwischen 50 und 100 Bar liegt.

14. Elektrohydraulische Bremse nach einem der vorhergehenden Ansprüche, **dadurch gekennzeichnet, dass** die Ventileinrichtung (10; 23, 25, 27) wenigstens ein von der elektronischen Steuerung gesteuertes Magnetventil umfasst und die Ventileinrichtung (10; 23, 25, 27) wenigstens eine Schaltstellung aufweist, in welcher die Ventileinrichtung (10; 23, 25, 27) eine Strömungsverbindung zwischen dem wenigstens einen Bremsaktuator (2) und dem Druckspeicher (8) und/oder dem Hydraulikflüssigkeitsvorrat (3) schafft.

15. Elektrohydraulische Bremse nach Anspruch 14, **dadurch gekennzeichnet, dass** das Magnetventil in die eine Schaltstellung federvorgespannt ist und die eine Schaltstellung unbestromt einnimmt.

16. Elektrohydraulische Bremse nach einem der Ansprüche 13 bis 15, **dadurch gekennzeichnet, dass** die Ventileinrichtung (10; 23, 25, 27) wenigstens Folgendes umfasst:
a) ein Rückschlagventil,
b) ein 2/2-Wege-Magnetventil,
c) ein 3/2-Wege-Magnetventil,
d) ein 4/2-Wege-Magnetventil.

17. Fahrzeug mit einer elektrohydraulischen Bremse nach einem der vorhergehenden Ansprüche

## Claims

1. Electrohydraulic brake (100) of a vehicle, which has at least the following:
a) an electronic control unit (1) with an implemented control, which is performed during a braking process, as required, in at least one control cycle, wherein at least one brake pressure reduction and at least one brake pressure build-up takes place in at least one hydraulic brake actuator (2) during the control cycle,
b) the at least one hydraulic brake actuator (2), which generates a braking force depending on the braking pressure applied,
c) a hydraulic fluid reservoir (3) for the unpressurized storage of hydraulic fluid,
d) a pump (4) and a prime mover (5) for the pump (4),
e) at least one pressure accumulator (8) for the pressure accumulation of hydraulic fluid which originates from the hydraulic fluid reservoir (3),
f) flow connections(13, 15, 17; 24, 26, 28) between the at least one brake actuator (2), the hydraulic fluid reservoir (3), the pump (4) and the pressure accumulator (8), wherein
g) in at least one flow connection (13, 15, 17; 24, 26, 28) a valve apparatus (10; 23, 25, 27) is arranged which can be controlled at least partly by the electronic control unit (1) and which controls a flow of hydraulic fluid in the at least one flow connection (13, 15, 17; 24, 26, 28), **characterized in that**
h) the electronic control unit (1) controls at least the prime mover (5) for the pump (4) and/or the valve apparatus (10; 23, 25, 27) such that during the at least one control cycle hydraulic fluid flows back and forth or is conveyed between the at least one brake actuator (2) and the pressure accumulator (8).

2. Electrohydraulic brake according to claim 1, **characterized in that** the electronic control unit (1) is configured such that, at least during the at least one control cycle, it activates the prime mover (5) of the pump (4) and/or the valve apparatus (10; 23, 25, 27)
a) for reducing the brake pressure such that hydraulic fluid flows or is conveyed from the at least one brake actuator (2) into the pressure accumulator (8), and
b) for building up the brake pressure such that hydraulic fluid flows or is conveyed from the pressure accumulator (8) into the at least one brake actuator (2).

3. Electrohydraulic brake according to claim 1 or 2, **characterized in that** the control is configured such that, at least during the at least one control cycle, at least one brake pressure hold is performed following a brake pressure build-up or a brake pressure reduction, in which the electronic control unit (1) controls the prime mover (5) of the pump (4) and/or the valve apparatus (10; 23, 25, 27) such that hydraulic fluid is held in the at least one brake actuator (2).

4. Electrohydraulic brake according to any one of the preceding claims, **characterized in that** the electronic control unit (1) controls at least the prime mover (5) of the pump (4) and/or the valve apparatus (10; 23, 25, 27) such that, when the control is inactive,
a) for a brake pressure build-up in the at least one brake actuator (2), hydraulic fluid flows or is conveyed from the hydraulic fluid reservoir (3) and/or from the pressure accumulator (8) into the at least one brake actuator (2), and
b) for a brake pressure reduction hydraulic fluid flows or is conveyed from the at least one brake actuator (2) into the hydraulic fluid reservoir (3).

5. Electrohydraulic brake according to any one of the preceding claims, **characterized in that** it comprises a brake request apparatus which, in order to control the braking process, delivers signals for the start and end of the braking process and for the degree of brake application of the brake into the electronic control unit (1), and which comprises
a) a brake value transmitter (19) which can be actuated by a driver of the vehicle, and/or
b) a driver assistance system (22) and/or an autopilot.

6. Electrohydraulic brake according to any one of the preceding claims, **characterized in that** the pump (4) is a unidirectionally operable pump with a single delivery direction, wherein the electronic control unit (1) controls the prime mover (5) of the unidirectionally operable pump (4) such that the unidirectionally operable pump (4) delivers hydraulic fluid in the single delivery direction.

7. Electrohydraulic brake according to claim 6, **characterized in that** the unidirectionally operable pump (4) is operated in the single delivery direction to build up the brake pressure.

8. Electrohydraulic brake according to any one of claims 1 to 5, **characterized in that** the pump (4) is a bidirectionally operable pump, wherein the electronic control unit (1) controls the prime mover (5) of the pump (4) such that the bidirectionally operable pump
a) delivers hydraulic fluid from the hydraulic fluid reservoir (3) and/or from the pressure accumulator (8) into the at least one brake actuator (2) in a first delivery direction, and
b) delivers hydraulic fluid from the at least one brake actuator (2) into the pressure accumulator (8) and/or into the hydraulic fluid reservoir (3) in a second delivery direction opposite the first delivery direction.

9. Electrohydraulic brake according to claim 8, **characterized in that** the operation of the bidirectionally operable pump (4)
a) is in the first delivery direction to build up brake pressure, and
b) is in the second delivery direction to reduce brake pressure.

10. Electrohydraulic brake according to claim 9, **characterized in that** the electronic control unit (1) controls the prime mover (5) of the pump (4) at least during the at least one control cycle in such a way that the pump (4) is operated alternately between the first delivery direction and the second delivery direction for brake pressure reduction and for brake pressure build-up.

11. Electrohydraulic brake according to any one of the preceding claims, **characterized in that** the control comprises a wheel-individual or axle-individual brake slip or traction slip control and/or a driving dynamics control.

12. Electrohydraulic brake according to any one of the preceding claims, **characterized in that** the electronic control unit (1) is configured to control the prime mover (5) of the pump (4) and the valve apparatus (10; 23, 25, 27) during a filling phase in order to deliver hydraulic fluid into the pressure accumulator (8) until the pressure in the pressure accumulator (8) is greater than a minimum pressure.

13. Electrohydraulic brake according to claim 12, **characterized in that** the minimum pressure is in a range of between 50 and 100 bar.

14. Electrohydraulic brake according to any one of the preceding claims, **characterized in that** the valve apparatus (10; 23, 25, 27) comprises at least one solenoid valve controlled by the electronic control unit and the valve apparatus (10; 23, 25, 27) has at least one switching position, in which the valve apparatus (10; 23, 25, 27) creates a flow connection between the at least one brake actuator (2) and the pressure accumulator (8) and/or the hydraulic fluid reservoir (3).

15. Electrohydraulic brake according to claim 14, **characterized in that** the solenoid valve is spring-biased into the one switching position and adopts the one switching position when unpowered.

16. Electrohydraulic brake according to any one of claims 13 to 15, **characterized in that** the valve apparatus (10; 23, 25, 27) comprises at least the following:
| | | |
|---|---|---|
| a) | a | non-return valve, |
| b) | a | 2/2-way solenoid valve, |
| c) | a | 3/2-way solenoid valve, |
| d) | a | 4/2-way solenoid valve. |

17. Vehicle with an electrohydraulic brake according to any one of the preceding claims.

## Revendications

1. Frein électrohydraulique (100) d'un véhicule, qui présente au moins ce qui suit :
a) une commande électronique (1) avec une régulation implémentée qui est mise en œuvre au besoin pendant un processus de freinage dans au moins un cycle de régulation, dans lequel au moins une réduction de pression de freinage et au moins une augmentation de pression de freinage sont effectuées pendant le cycle de régulation dans au moins un actionneur de freinage hydraulique (2),
b) le au moins un actionneur de freinage hydraulique (2) qui génère une force de freinage en fonction de la pression de freinage réglée,
c) une réserve de fluide hydraulique (3) pour le stockage sans pression de fluide hydraulique,
d) une pompe (4) ainsi qu'une machine d'entraînement (5) pour la pompe (4),
e) au moins un accumulateur de pression (8) pour le stockage sous pression de fluide hydraulique qui provient de la réserve de fluide hydraulique (3),
f) des connexions d'écoulement (13, 15, 17 ; 24, 26, 28) entre le au moins un actionneur de freinage (2), la réserve de fluide hydraulique (3), la pompe (4) et l'accumulateur de pression (8), dans lequel
g) un appareil de vanne (10 ; 23, 25, 27) pouvant être commandé au moins en partie par le dispositif de commande électronique (1), appareil qui commande un écoulement de fluide hydraulique dans au moins une connexion d'écoulement (13, 15, 17 ; 24, 26, 28) est disposé dans au moins une connexion d'écoulement (13, 15, 17 ; 24, 26, 28), **caractérisé en ce que**
h) le dispositif de commande électronique (1) commande au moins la machine d'entraînement (5) pour la pompe (4) et/ou l'appareil de vanne (10 ; 23, 25, 27) de sorte que, pendant le au moins un cycle de régulation, du fluide hydraulique circule ou est transporté dans les deux sens entre le au moins un actionneur de freinage (2) et l'accumulateur de pression (8).

2. Frein électrohydraulique selon la revendication 1, **caractérisé en ce que** le dispositif de commande électronique (1) est conçu de sorte qu'il commande, au moins pendant le au moins un cycle de régulation, la machine d'entraînement (5) de la pompe (4) et/ou l'appareil de vanne (10 ; 23, 25, 27)
a) pour réduire la pression de freinage de sorte que du fluide hydraulique s'écoule ou soit transporté depuis le au moins un actionneur de freinage (2) vers l'accumulateur de pression (8), et
b) pour augmenter la pression de freinage de sorte que du fluide hydraulique s'écoule ou soit transporté depuis l'accumulateur de pression (8) vers le au moins un actionneur de freinage (2).

3. Frein électrohydraulique selon la revendication 1 ou 2, **caractérisé en ce que** la régulation est conçue de sorte qu'au moins pendant le au moins un cycle de régulation, au moins un maintien de pression de freinage est effectué à la suite d'une augmentation ou d'une réduction de pression de freinage, dans lequel le dispositif de commande électronique (1) commande la machine d'entraînement (5) de la pompe (4) et/ou l'appareil de vanne (10 ; 23, 25, 27) de sorte que du fluide hydraulique soit maintenu dans le au moins un actionneur de freinage (2).

4. Frein électrohydraulique selon l'une quelconque des revendications précédentes, **caractérisé en ce que** le dispositif de commande électronique (1) commande au moins la machine d'entraînement (5) de la pompe (4) et/ou l'appareil de vanne (10 ; 23, 25, 27) de sorte que, lors d'une régulation inactive,
a) pour augmenter la pression de freinage dans le au moins un actionneur de freinage (2), du fluide hydraulique provenant de la réserve de fluide hydraulique (3) et/ou de l'accumulateur de pression (8) s'écoule ou est transporté dans le au moins un actionneur de freinage (2), et
b) pour réduire la pression de freinage, du fluide hydraulique provenant de l'au moins un actionneur de freinage (2) s'écoule ou est transporté dans la réserve de fluide hydraulique (3).

5. Frein électrohydraulique selon l'une quelconque des revendications précédentes, **caractérisé en ce qu'**il comprend un appareil de demande de freinage qui, pour commander le processus de freinage, règle dans leu dispositif de commande électronique (1) des signaux pour le début et la fin du processus de freinage ainsi que pour le degré d'actionnement de freinage du frein, et qui comprend
a) un générateur de valeur de freinage (19) pouvant être actionné par un conducteur du véhicule, et/ou
b) un système d'aide à la conduite (22) et/ou un pilote automatique.

6. Frein électrohydraulique selon l'une quelconque des revendications précédentes, **caractérisé en ce que** la pompe (4) est une pompe à fonctionnement unidirectionnel avec une seule direction de transport, dans lequel le dispositif de commande électronique (1) commande la machine d'entraînement (5) de la pompe à fonctionnement unidirectionnel (4) de sorte que la pompe à fonctionnement unidirectionnel (4) transporte du fluide hydraulique dans la seule direction de transport.

7. Frein électrohydraulique selon la revendication 6, **caractérisé en ce que** le fonctionnement de la pompe à fonctionnement unidirectionnel (4) dans la seule direction de transport est effectué pour augmenter la pression de freinage.

8. Frein électrohydraulique selon l'une quelconque des revendications 1 à 5, **caractérisé en ce que** la pompe (4) est une pompe à fonctionnement bidirectionnel, dans lequel le dispositif de commande électronique (1) commande la machine d'entraînement (5) de la pompe (4) de sorte que la pompe à fonctionnement bidirectionnel,
a) dans une première direction de transport, transporte du fluide hydraulique depuis la réserve de fluide hydraulique (3) et/ou depuis l'accumulateur de pression (8) dans le au moins un actionneur de freinage (2), et,
b) dans une seconde direction de transport opposée à la première direction de transport, transporte du fluide hydraulique depuis le au moins un actionneur de freinage (2) dans l'accumulateur de pression (8) et/ou dans la réserve de fluide hydraulique (3).

9. Frein électrohydraulique selon la revendication 8, **caractérisé en ce que** le fonctionnement de la pompe à fonctionnement bidirectionnel (4)
a) est effectué dans la première direction de transport pour augmenter la pression de freinage, et
b) est effectué dans la seconde direction de transport pour réduire la pression de freinage.

10. Frein électrohydraulique selon la revendication 9, **caractérisé en ce que** le dispositif de commande électronique (1) commande la machine d'entraînement (5) de la pompe (4) au moins pendant le au moins un cycle de régulation de sorte que la pompe (4) fonctionne alternativement dans la première direction de transport et dans la seconde direction de transport pour réduire la pression de freinage et pour augmenter la pression de freinage.

11. Frein électrohydraulique selon l'une quelconque des revendications précédentes, **caractérisé en ce que** la régulation comprend une régulation de glissement au freinage ou d'antipatinage individuelle par roue ou par essieu et/ou une régulation de la dynamique de conduite.

12. Frein électrohydraulique selon l'une quelconque des revendications précédentes, **caractérisé en ce que** le dispositif de commande électronique (1) est conçu de sorte qu'il commande la machine d'entraînement (5) de la pompe (4) et l'appareil de vanne (10 ; 23, 25, 27) pendant une phase de remplissage pour transporter du fluide hydraulique dans l'accumulateur de pression (8) jusqu'à ce que la pression régnant dans l'accumulateur de pression (8) soit supérieure à une pression minimale.

13. Frein électrohydraulique selon la revendication 12, **caractérisé en ce que** la pression minimale se situe dans une plage entre 50 et 100 bars.

14. Frein électrohydraulique selon l'une quelconque des revendications précédentes, **caractérisé en ce que** l'appareil de vanne (10; 23, 25, 27) comprend au moins une électrovanne commandée par le dispositif de commande électronique, et l'appareil de vanne (10 ; 23, 25, 27) présente au moins une position de commutation dans laquelle l'appareil de vanne (10 ; 23, 25, 27) établit une liaison d'écoulement entre le au moins un actionneur de freinage (2) et l'accumulateur de pression (8) et/ou la réserve de fluide hydraulique (3).

15. Frein électrohydraulique selon la revendication 14, **caractérisé en ce que** l'électrovanne est précontrainte par ressort dans la une position de commutation et prend la une position de commutation sans courant.

16. Frein électrohydraulique selon l'une quelconque des revendications 13 à 15, **caractérisé en ce que** l'appareil de vanne (10 ; 23, 25, 27) comprend au moins ce qui suit :
| | | |
|---|---|---|
| a) | un | clapet de retenue, |
| b) | une | électrovanne à 2/2 voies, |
| c) | une | électrovanne à 3/2 voies, |
| d) | une | électrovanne à 4/2 voies. |

17. Véhicule avec un frein électrohydraulique selon l'une quelconque des revendications précédentes.
